# EUROPÄISCHE PATENTSCHRIFT

(11) **EP 2 304 200 B1**
(45) Veröffentlichungstag und Bekanntmachung des Hinweises auf die Patenterteilung: **25.09.2013**
(21) Anmeldenummer: 09779499.4
(22) Anmeldetag: 18.05.2009
(51) Int. Cl.: F01N 3/025, F01N 3/035, F01N 3/20, F01N 3/36

(54) **VORRICHTUNG ZUR EINDOSIERUNG VON KRAFTSTOFF**
DEVICE FOR METERING FUEL
DISPOSITIF DE DOSAGE DE CARBURANT

(30) Priorität: 16.07.2008 DE 102008040463
(43) Veröffentlichungstag der Anmeldung: 06.04.2011
(73) Patentinhaber: Robert Bosch GmbH, 70442 Stuttgart (DE)
(72) Erfinder: KEUSEN, Guenter, 71686 Remseck-Pattonville (DE); REUSING, Volker, 70197 Stuttgart (DE); STEIN, Stefan, 70195 Stuttgart (DE)
(86) Internationale Anmeldenummer: PCT/EP2009/055972
(87) Internationale Veröffentlichungsnummer: WO 2010/006829

(56) Entgegenhaltungen:
- WO-A-2008/006840
- WO-A-2008/080693
- DE-A1-102005 034 704

## Beschreibung

### Stand der Technik

An Verbrennungskraftmaschinen werden heute Maßnahmen getroffen, die der Regeneration von Komponenten des Abgassystems der Verbrennungskraftmaschine sowie von dessen Thermomanagement dienlich sind. So werden Einspritzventile zur Eindosierung von Kraftstoff eingesetzt, um zum Beispiel einen Dieselpartikelfilter zu regenerieren. Eine kostspielige Beschichtung des Dieselpartikelfilters oder ein Zusatztank für ein Additiv sind nicht erforderlich. Die Vorrichtung zur Eindosierung von Dieselkraftstoff vor dem Oxidationskatalysator ist in den Niederdruck-Kraftstoffkreislauf integriert. Sie spritzt eine genau dosierte Menge Kraftstoff oberhalb des Oxidationskatalysators ohne Druckluftunterstützung in den Abgasstrang ein. Die Abgastemperatur beim Durchströmen des Oxidationskatalysators steigt hierdurch im Abgassystem stark an. Dabei brennt der im Partikelfilter gespeicherte Ruß ab. Die Durchflussrate wird entsprechend den aktuellen Anforderungen variiert. Das robuste und komplett wartungsfreie System steuert die Kraftstoffzugabe bedarfsgerecht und unabhängig vom Einspritzsystem des Motors.

Aus WO 2008/080693 ist eine solche Vorrichtung zur Dosierung von Kraftstoff zum Abgassystem eines Verbrennungsmotors mit einem im Abgassystem angeordneten Einspritzventil bekannt.

### Offenbarung der Erfindung

Erfindungsgemäß wird eine Eindosierungsvorrichtung für Kraftstoff vor einem Oxidationskatalysator für eine Abgasanlage von Verbrennungsmotoren geschaffen, wobei nach einer Versorgungseinrichtung für Kraftstoff ein Schließventil und/oder ein Dosierventil sowie ein Einspritzventil in eine Kraftstoffleitung einer Zumesseinheit integriert sind und im Bereich der Zumesseinheit und/oder des Dosierventils zumindest eine Einrichtung zur Dämpfung von Druckschwankungen vorgesehen ist. Bei dieser kann es sich um ein Dämpfungsglied, einen Erweiterungsteil, einen Behälter oder ein wie auch immer gestaltetes Zusatzvolumen handeln. Mit Hilfe der Einrichtung zur Dämpfung können in der Eindosieruhgsvorrichtung bzw. in der Abgasanlage auftretende Druckspitzen bzw. Drucksignale so minimiert werden, dass an den einzelnen Aggregaten keine Beschädigungen auftreten. Das heißt auch, dass Druckspitzen stark reduziert werden, dass sie auf die einzelnen Sensoren wirken und somit registriert werden. Außerdem kann mit der erfindungsgemäß vorgeschlagenen Anordnung ein mittleres Druckniveau der Zumesseinheit angepasst bzw. reduziert werden. Des Weiteren kann über das Vorschalten einer Zulaufdrossel vor die Zumesseinheit der Druckverlauf geeignet gedämpft werden, um sowohl Spezifikationsrandbedingungen der Zumesseinheit wie auch des Einspritzventils für den Kraftstoff in das Abgassystem vor dem Dieselpartikelfilter zu erfüllen.

Vorteilhaft ist es, dass nach der Eindosierungsvorrichtung oder einer Niederdruckeinrichtung für Kraftstoff, insbesondere für Dieselkraftstoff, die Einrichtung zur Dämpfung von Druckschwankungen der Zumesseinheit zugeordnet und zur Reduzierung des Druckniveaus in das Leitungssystem der Zumesseinheit integriert ist.

Ferner ist es vorteilhaft, dass das Abgassystem bzw. die Zumesseinheit zumindest über eine ein Überströmventil aufweisende Rücklaufleitung an einen Sammelbehälter im Kraftfahrzeug angeschlossen ist und stromaufwärts nach der Anschlussstelle der Rücklaufleitung an die Kraftstoffleitung die Zumesseinheit und/oder das Schließventil mit der Einrichtung zur Dämpfung von Druckschwankungen vorgesehen ist. Im Sammelbehälter wird der Kraftstoff bevorratet. Je nach Ausführungsform kann auch die erste Drossel entfallen und nur mit dem Schließventil gearbeitet werden.

Gemäß einer bevorzugten Ausführungsform der erfindungsgemäßen Lösung ist schließlich vorgesehen, dass die Einrichtung zur Dämpfung von Druckschwankungen zumindest aus der ersten und/oder einer zweiten Drossel und/oder einer der Zumesseinheit zugeordneten Kammer oder einer Erweiterung im Leitungssystem der Zumesseinheit gebildet ist.

Vorteilhaft ist es ferner, dass die erste Drossel stromaufwärts nach der Anschlussstelle der Rücklaufleitung an die Kraftstoffleitung und vor dem Schließventil und die zweite Drossel in der Kraftstoffleitung zwischen dem Schließventil und dem Dosierventil vorgesehen ist.

Außerdem ist es vorteilhaft, dass der Behälter oder das Erweiterungsteil zur Aufnahme eines Kraftstoff-Zusatzvolumens zwischen dem Schließventil und dem Dosierventil in die Kraftstoffleitung integriert und Teil eines Ventilblocks bzw. Teil der Kraftstoffleitung ist.

Vorteilhaft ist es auch, dass an die Kraftstoffleitung nach dem Schließventil und vor dem Dosierungsventil zumindest ein Drucksensor vorgesehen ist, der mit dem Erweiterungsteil zur Aufnahme eines zusätzlichen Kraftstoffvolumens in Wirkverbindung steht.

Ferner ist es vorteilhaft, dass an die Kraftstoffleitung zwischen dem Schließventil und dem Dosierungsventil zumindest die zweite Drossel mit einem Drucksensor angeschlossen ist, der mit dem Erweiterungsteil zur Aufnahme eines zusätzlichen Kraftstoffvolumens in Wirkverbindung steht.

Es ist auch vorteilhaft, dass an die Kraftstoffleitung zwischen dem Schließventil und dem Dosierungsventil oder dem Erweiterungsteil zur Aufnahme eines zusätzlichen Kraftstoffvolumens eine zweite Rücklaufleitung mit einem Überströmventil angeschlossen ist.

### Kurze Beschreibung der Zeichnungen

Anhand der Zeichnung wird die Erfindung nachstehend eingehender beschrieben.

Es zeigt:
- Figur 1: ein Blockschaltbild eines Beispiels einer Abgasanlage mit verschiedenen elektromagnetisch bzw. elektronisch gesteuerten Ventilen, einer Zumesseinheit, einem Oxidationskatalysator sowie einem Partikelfilter;
- Figur 2: ein Blockschaltbild ähnlich wie das erste Ausführungsbeispiel, wobei zwischen einer Zulaufdrossel und der Zumesseinheit eine ein Überströmventil aufweisende Rücklaufleitung an die Kraftstoffleitung angeschlossen und mit dem Sammelbehälter verbunden ist;
- Figur 3: ein Blockschaltbild eines weiteren Ausführungsbeispiels mit der Möglichkeit, ein zusätzliches Dämpfungsglied in Form einer Kammer innerhalb der Zumesseinheit zu integrieren.

### Ausführungsformen

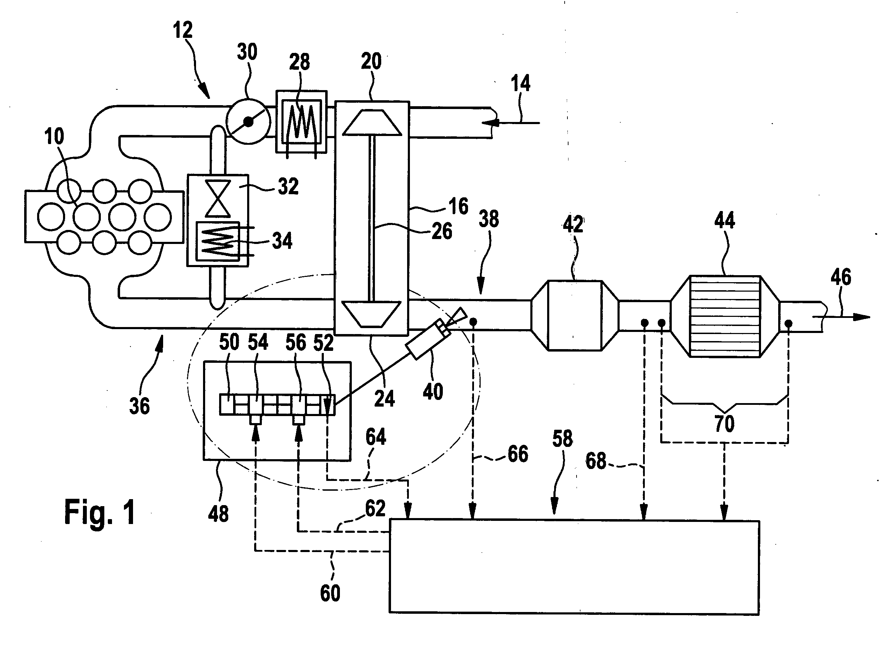

Der Darstellung gemäß Figur 1 ist ein derzeit eingesetztes System zur Abgasnachbehandlung, insbesondere an selbstzündenden Verbrennungskraftmaschinen, zu entnehmen.

Figur 1 zeigt in stark vereinfachter Weise ein Abgasnachbehandlungssystem, bei dem in ein Abgassystem einer Verbrennungskraftmaschine 10 Kraftstoff, insbesondere Dieselkraftstoff, eindosiert wird.

Wie der schematischen Darstellung in Figur 1 zu entnehmen ist, umfasst eine Verbrennungskraftmaschine 10, bei der es sich hier um eine Vierzylinder-Verbrennungskraftmaschine, insbesondere eine selbstzündende Verbrennungskraftmaschine, handelt, einen Ansaugtrakt 12 sowie einen Abgastrakt 36. Die Verbrennungskraftmaschine 10 verfügt über eine Aufladeeinrichtung, die gemäß der Darstellung in Figur 1 als Abgasturbolader realisiert ist. Im Ansaugtrakt 12 der Verbrennungskraftmaschine 10 erfolgt ein Ansaugen von Ansaugluft 14, die im Verdichterteil 20 der insbesondere als Abgasturbolader beschaffenen Aufladeeinrichtung 16 verdichtet wird. Die bei der Verdichtung erhitzte Luft wird anschließend in einem im Ansaugtrakt 12 untergebrachten Zwischenkühler 28 abgekühlt. Über eine dem Zwischenkühler 28 nachgeschaltete Drosseleinrichtung wird die Drehzahl der Verbrennungskraftmaschine 10 beeinflusst. Hinter der Drosseleinrichtung 30, die im Ansaugtrakt 12 der Verbrennungskraftmaschine 10 vorgesehen ist, mündet eine Abgasrückführung 32, welche eine Abgasrückführventil sowie einen Kühler 34 zur Abkühlung der sehr heißen Abgase aufweist, die der verdichteten und im Zwischenkühler 28 abgekühlten Frischluft wieder zugeführt werden.

Der Verbrennungskraftmaschine 10 ist darüber hinaus der Abgastrakt 36 nachgeschaltet. An einem Abgaskrümmer wird das Abgas abgasseitig in eine Abgasleitung 38 überführt, in der der erwähnte Turbinenteil 24 der insbesondere als Abgasturbolader beschaffenen Aufladeeinrichtung 16 der Verbrennungskraftmaschine 10 untergebracht ist. Über den Turbinenteil 24 der Aufladeeinrichtung 16 wird das Abgas entspannt und der Verdichterteil 20 zur Verdichtung der Ansaugluft 14 angetrieben. Der Verdichterteil 20 und der Turbinenteil 24 sind über eine starre Welle 26 miteinander gekoppelt. Anstelle der in Figur 1 dargestellten starren Welle 26 könnten auch Kupplungen, miteinander gekoppelte Wellenabschnitte oder dergleichen vorgesehen sein.

In der Abgasleitung 38 ist stromab des Turbinenteils 24 der insbesondere als Abgasturbolader beschaffenen Aufladeeinrichtung 16 ein Einspritzventil 40 angeordnet. Über das Einspritzventil 40, dem eine Zumesseinheit 48 vorgeschaltet ist, wird Kraftstoff, insbesondere Dieselkraftstoff, hinter dem Turbinenteil 24 und vor einem in der Abgasleitung 38 angeordneten Oxidationskatalysator 42 eingespritzt. Hinter der Einspritzstelle, d.h. stromab des Einspritzventiles 40, befindet sich der Oxidationskatalysator 42, dem wiederum ein Dieselpartikelfilter 44 nachgeschaltet ist. Abgas 46, welches die Abgasleitung 38 verlässt, hat demnach den Oxidationskatalysator 42 sowie den Dieselpartikelfilter 44 passiert.

Dem Einspritzventil 40, bei dem es sich um ein konstruktiv angepasstes Kraftstoffeinspritzventil handeln kann, öffnet bei einem Versorgungsdruck, so dass Kraftstoff, insbesondere Dieselkraftstoff, in die Abgasleitung 38 des Abgastraktes 36 eingespritzt werden kann. Die in der Darstellung gemäß Figur 1 schematisch wiedergegebene Zumesseinheit 48 umfasst einen ersten Drucksensor 50 sowie einen zweiten Drucksensor 52. Des Weiteren sind in die Zumesseinheit 48 ein Schließventil 54 sowie ein Dosierventil 56 integriert. Die Zumesseinheit 48 ihrerseits wird von einem Steuerungsmodul 58 gesteuert. Das Steuerungsmodul 58 steuert über ein Ansteuersignal 60 das in der Zumesseinheit 48 angeordnete Schließventil 54 an, ferner über ein Ansteuersignal 62 das in der Zumesseinheit 48 vorgesehene Dosierventil 56. Vom zweiten Drucksensor 52, der in der Zumesseinheit 48 der Zuleitung zum Einspritzventil 40 vorgeschaltet ist, gelangt ein Drucksignal 64 zum Steuerungsmodul 58.

Diesem werden darüber hinaus Temperatursignale 66 und 68 übermittelt. Bei dem Temperatursignal 66 handelt es sich um die Abgastemperatur, die nach Einspritzen von Kraftstoff, insbesondere Dieselkraftstoff, in die Abgasleitung 38 des Abgastraktes 36 herrscht. Durch das Einspritzen von Kraftstoff erfolgt eine starke Erhöhung der Temperatur in der Abgasleitung 38 vor Passage des Oxidationskatalysators 42. Diesem nachgeschaltet, wird ein Temperatursignal 68 nach dem Oxidationskatalysator 42 ebenfalls an das Steuerungsmodul 58 übermittelt, ebenso der sich bei der Passage des Dieselpartikelfilters 44 im Abgas einstellende Druckverlust 70, bevor das gereinigte Abgas 46 die Abgasleitung 38 des Abgastraktes 36 der Verbrennungskraftmaschine 10 verlässt.

Das Zuströmen von Kraftstoff zur Zumesseinheit 48 kann durch Ansteuerung des Schließventils 54 unterbrochen werden. Das Schließventil 54 wird immer dann betätigt, wenn keine Regeneration des Dieselpartikelfilters 44, d.h. kein Abbrand der dort angelagerten Rußpartikel durch Erhöhung der Abgastemperatur erfolgen soll. Dies ist im Normalbetrieb in der Regel der Fall. Über den ersten stromaufwärts angeordneten Drucksensor 50 wird die erforderliche einzudosierende Kraftstoffmenge errechnet. Diese wird über das in der Zumesseinheit 48 enthaltene Dosierventil 56 zur Verfugung gestellt und zum Einspritzventil 40 gefördert.

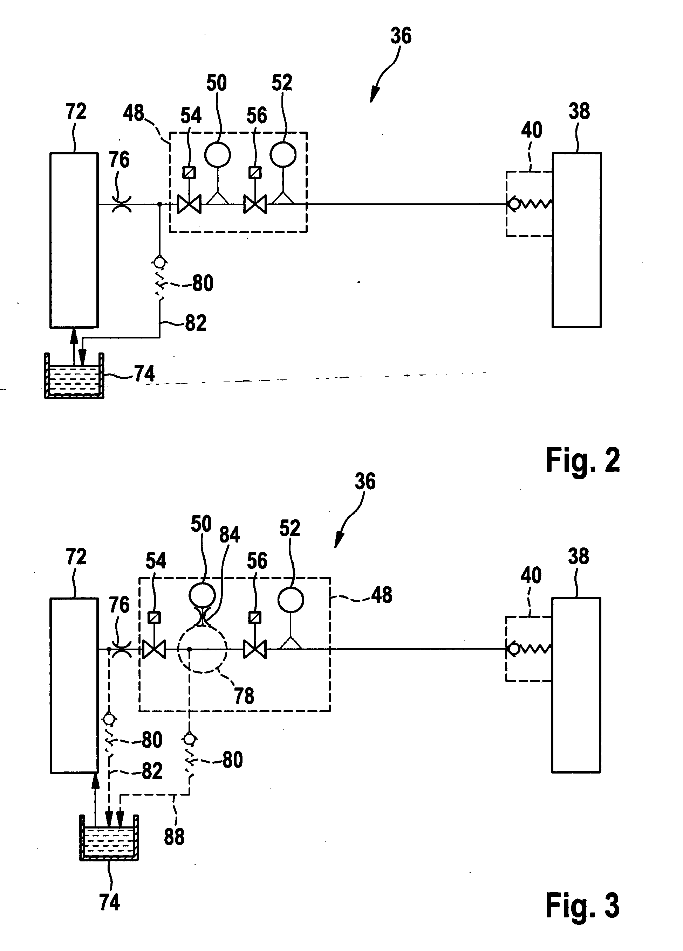

Der Darstellung gemäß Figur 2 ist zu entnehmen, dass aus einem Niederdruckkreis 72 Kraftstoff über eine Drosselstelle 76 der Zumesseinheit 48 zugeführt wird. Der Niederdruckkreis 72 steht über eine in der Darstellung gemäß Figur 2 nur schematisch angedeutete Leitung mit einem Sammelbehälter 74 in Verbindung. Über die Drosselstelle 76, die auch als Zuführdrossel bezeichnet wird, strömt der Kraftstoff der Zumesseinheit 48 zu, die in der Darstellung gemäß Figur 2 durch die rechteckige gestrichelte Umrahmung angedeutet ist. Das Gehäuse, in dem die Zumesseinheit 48 untergebracht ist, ist in der Figur 2 nicht näher dargestellt.

In Regenerationspausen, d.h. dann, wenn der Dieselpartikelfilter 44 nicht regeneriert werden soll, d.h. kein Abbrand von in diesem angelagerten Rußpartikeln durchgeführt wird, unterbricht das der Drosselstelle 76 nachgeschaltete Schließventil 54 den Zufluss von Kraftstoff zur Zumesseinheit 48. In diesem Falle strömt der Kraftstoff über ein zum Beispiel als Rückschlagventil ausgebildetes Überströmventil 80 über einen Rücklauf 82 zum Sammelbehälter 74 zurück. Darüber hinaus umfasst die Zumesseinheit 48 gemäß der Darstellung in Figur 2 einen ersten Drucksensor 50, mit welchem die erforderliche, einzudosierende Dosiermenge berechnet wird. Diese wird über das Dosierventil 56 zur Verfügung gestellt und von diesem zum Einspritzventil 40 gefördert. Bei diesem handelt es sich bevorzugt um ein federbelastetes Einspritzventil, welches bei Überschreiten eines bestimmten Öffnungsdrucks öffnet, so dass Kraftstoff in die Abgasleitung 38 eingespritzt werden kann.

Die Zumesseinheit 48 umfasst darüber hinaus einen weiteren, dem Dosierventil 56 nachgeschalteten Drucksensor 52. Dieser stromab angeordnete zweite Drucksensor 52 dient zur Erkennung einer Leckage in der Leitung, die sich zum Einspritzventil 40 erstreckt, und misst den Druck des Kraftstoffs bei Austritt aus der Zumesseinheit 48.

Figur 3 zeigt die erfindungsgemäß vorgeschlagene Zumesseinheit 48. Analog zur Darstellung gemäß Figur 2 wird der Zumesseinheit 48 gemäß der Darstellung in Figur 3 Kraftstoff aus einem Niederdruckkreis 72 zugeführt. Dem Niederdruckkreis 72 wird der Kraftstoff aus einem Sammelbehälter 74 zugeführt. Bei geschlossenem Schließventil 54, d.h. in Regenerationspausen des Dieselpartikelfilters 44, zweigt vor einer Zulaufdrossel 76 der Rücklauf 82 zum Sammelbehälter 74 ab, in diesem Falle gelangt kein Kraftstoff aus dem Niederdruckkreis 72 über die Zulaufdrossel 76 zur Zumesseinheit 48. Der Darstellung gemäß Figur 3 ist zu entnehmen, dass die Zumesseinheit 48 einen Anschluss zwischen dem Schließventil 54 und dem Dosierventil 56 aufweist. An diesem Anschluss wird ein zweites Überströmventil 80 sowie ein Parallelrücklauf 88 zum Sammelbehälter 74 angeschlossen. Der Parallelrücklauf 88 ist zwischen dem Schließventil 54 und dem Dosierventil 56 und/oder einem Druckdämpfer 78 zur Aufnahme eines zusätzlichen Kraftstoffvolumens angeschlossen und steht mit dem Sammelbehälter 74 in Verbindung. Durch diese Lösung kann das mittlere Druckniveau, welches in der Zumesseinheit 48 herrscht, d.h. ein Betriebsdruckniveau in der Zumesseinheit 48, eingestellt und aufrechterhalten werden. Darüber hinaus kann der Druckverlauf durch entsprechende Dimensionierung der Zulaufdrossel 76 beeinflusst werden.

Wie aus der Darstellung gemäß Figur 3 hervorgeht, befindet sich zwischen dem Schließventil 54 und dem Dosierventil 56 der Druckdämpfer 78, der als Erweiterung des Strömungsquerschnitts, als Dämpfungsvolumen oder dergleichen ausgestaltet sein kann. Wie aus der Darstellung gemäß Figur 3 weiter hervorgeht, ist die Zumesseinheit 48 so aufgebaut, dass der Anschluss des zweiten Parallelrücklaufes 88 zum Sammelbehälter 74 zwischen dem Schließventil 54 und dem Dosierventil 56 liegt. Dem Druckdämpfer 78 ist über eine Dämpferdrossel 84 der erste Drucksensor 50 zugeordnet. Der zweite Drucksensor 52 liegt am Ausgang der Zumesseinheit 48, dem Dosierventil 56 nachgeschaltet. Über den zweiten

Drucksensor 52 wird eine Leckage in der Leitung, die zum Einspritzventil 40 verläuft, erkannt. Über das Einspritzventil 40, welches im einfachsten Falle als ein Rückschlagventil ausgeführt sein kann, wird Kraftstoff in die Abgasleitung 38 und das dort strömende Abgas eingebracht. Das im einfachsten Falle als Rückschlagventil ausgebildete Einspritzventil 40 öffnet, sobald ein bestimmter Öffnungsdruck in der Zuleitung, d.h. nach der Zumesseinheit 48, erreicht ist. Dieser Öffnungsdruck wird über den zweiten Drucksensor 52, der in der Zumesseinheit 48 enthalten ist, kontinuierlich gemessen.

Das zweite Überströmventil 80, welches in dem Parallelrücklauf 88 zum Sammelbehälter 74 enthalten ist, kann ein externes Bauteil sein, welches als separates Bauteil in dem Parallelrücklauf 88 bzw. am nicht dargestellten Gehäuse der Zumesseinheit 48 vorgesehen ist. Daneben kann das zweite Überströmventil 80 auch in die Zumesseinheit 48 integriert sein. Je nach Einsatzzweck und Fahrzeugapplikationen kann der Öffnungsdruck angepasst werden und der Durchfluss des Kraftstoffs durch das zweite Überströmventil 80 zum Sammelbehälter 54 beeinflusst werden.

Darüber hinaus ist innerhalb der Zumesseinheit 48 ein möglichst großer Druckdämpfer 78 vorgesehen. Zwischen diesem und dem ersten Drucksensor 50 kann eine weitere Dämpferdrossel 84 vorgesehen sein. Durch geeignete Abstimmung des Drosselquerschnittes der Dämpferdrossel 84 in Verbindung mit dem definierten Öffnungszeitpunkt des zweiten Überströmventils 80, das im Parallelrücklauf 88 aufgenommen ist, kann in der Zumesseinheit 48 der gewünschte Betriebsdruckbereich eingestellt und auch für den Betrieb aufrechterhalten werden.

Bei Bedarf können Dämpfungsmaßnahmen auch außerhalb der Zumesseinheit 48 vorgenommen werden. Zum Beispiel kann das Druckniveau reduziert werden, damit eventuellen Spezifikationen des Schließventils 54 Rechnung getragen werden kann. Optional können Druckschwingungen, die sich im Niederdruckkreis 72 einstellen, vor der Zumesseinheit 48 dadurch reduziert werden, dass ein Dämpfungsvolumen im Bereich der Zulaufdrossel 76 vor der Zumesseinheit 48 vorgesehen wird. Hierzu kann zum Beispiel ein elastischer Schlauch oder dergleichen eingesetzt werden, der sich zwischen dem Niederdruckkreis 72 und der Zumesseinheit 48 erstreckt.

Die Anbindung des ersten Drucksensors 50 hinter dem Schließventil 54 erfolgt zum Beispiel über eine im Ventilgehäuse vorgesehene Bohrung. Durch die direkte Anbindung des ersten Drucksensors 50 können Druckschwankungen und Kavitationsereignisse, die sich stromab des Schließventils 54 einstellen und somit Versorgungsdruckschwankungen hervorrufen, ausgeglichen werden. Um Druckspitzen vor dem ersten Drucksensor 50 zu vermeiden oder zu minimieren, können folgende Maßnahmen getroffen werden: einfache Anbindung des ersten Drucksensors 50 an die Dämpferdrossel 84, wie in Figur 3 dargestellt. Des Weiteren kann durch Darstellung eines großzügig ausgelegten Kraftstoffvolumens, d.h. des Druckdämpfers 78, mit Hilfe des bereits erwähnten Ausgleichsraumes oder des Erweiterungsteils eine Dämpfung von Druckschwankungen erreicht werden.

Die Dosierung der letztlich zur Einspritzung in die Abgasleitung 38 erforderlichen Kraftstoffmenge erfolgt mit Hilfe des Dosierventils 56, dem zur Messung des Druckniveaus der zweite Drucksensor 52 nachgeschaltet ist.

Das Schließventil 54 unterbricht in den Regenerationspausen den Zufluss von Kraftstoff zum Dosierventil 56. In diesem Falle strömt der Kraftstoff über das erste Überströmventil 80, welches der Zulaufdrossel 76 vorgeschaltet ist, und den Rücklauf 82 in den Sammelbehälter 74 zurück. Wird das Schließventil 54 geöffnet, kann der Kraftstoff nach Passage des Druckdämpfers 78 zum Dosierventil 56 gelangen. An einer Verbindungsbohrung zwischen dem Schließventil 54 und dem Dosierventil 56 ist zur optimalen Abstimmung bzw. Berechnung der in den Abgasstrom einzudosierenden Kraftstoffmenge der erste Drucksensor 50 angeordnet. Dieser dient der Berechnung der erforderlichen Dosiermenge. Diese Dosiermenge wird über das Dosierventil 56 zur Verfügung gestellt und zum Einspritzventil 40 gefördert. Bei dem Einspritzventil 40 kann es sich - wie oben erwähnt - um ein passiv öffnendes Ventil handeln, so zum Beispiel ein Rückschlagventil, das sich bei Erreichen eines bestimmten Öffnungsdruckes öffnet und Kraftstoff, insbesondere Dieselkraftstoff, in die Abgasleitung 38 des Abgastraktes 36 einspritzt.

Bei Einsatz des erfindungsgemäß vorgeschlagenen Abgasbehandlungssystems wird das Einspritzventil 40 zum Beispiel in einen in der Darstellung gemäß Figur 3 nicht dargestellten Kühlkörper eingeschraubt, der zum Beispiel direkt über den Kühlwasserkreislauf der Verbrennungskraftmaschine 10 versorgt wird. Die Kühlung des Einspritzventils 40 kann auch mit Hilfe eines in der Zeichnung nicht dargestellten, am Einspritzventil 40 vorbeigeführten Kraftstoffstromes ermöglicht werden.

Die prinzipielle Anbindung des zweiten Drucksensors 52 ist in den Ausführungsformen gemäß der Darstellungen in den Figuren 2 und 3 identisch.

Gemäß der Darstellung in Figur 3 wird stromab des Schließventils 54 bzw. stromab des ersten Drucksensors 50 in der Zumesseinheit 48 ein zusätzliches als Druckdämpfer dienendes Volumen 78 zur Verfügung gestellt. Dieses kann zum Beispiel als Querschnittserweiterung in der Leitung der Zumesseinheit 48 vorgesehen sein, so zum Beispiel durch eine Bohrungserweiterung dargestellt werden. Das Zurverfügungstellen dieses zusätzlichen Volumens 78 > 2 cm³ oder zwischen 2 cm³ und 20 cm³, insbesondere zwischen 2 cm³ und 10 cm³, dient als Dämpfungsvolumen innerhalb der Zumesseinheit 48.

Die Zumesseinheit 48 ist, wie bereits erwähnt, gemäß der Darstellung in Figur 3, an den Niederdruckkreis 72 angeschlossen. Die Dosierleitung verlässt die Zumesseinheit 48 stromab des zweiten Drucksensors 52 und erstreckt sich bis zum Einspritzventil 40. Mit Hilfe von vorbeiströmendem Kraftstoff kann dieses auf kostengünstige Weise gekühlt werden, da die Abgastemperatur beim Durchströmen des Oxidationskatalysators auf ca. 600 °C ansteigt. Ferner kann mit Hilfe einer in der Darstellung gemäß Figur 3 nicht dargestellten Kühleinrichtung ein schnelles Altern des Kraftstoffs vermieden werden. Kurz vor der Auslassöffnung des Einspritzventils 40 kann an die Dosierleitung ein Kraftstoffrücklauf angeschlossen werden, der über ein steuer- bzw. regelbares Druckventil wiederum an den Sammelbehälter 74 angeschlossen ist.

## Patentansprüche

1. Eindosierungsvorrichtung für Kraftstoff vor einem Oxidationskatalysator (42) im Abgastrakt (36) einer Verbrennungskraftmaschine (10), wobei nach einer Versorgungseinrichtung (72) für Kraftstoff ein Ventil (54) sowie eine Einspritzdüse (40) in eine Leitung einer Zumesseinheit (48) integriert sind, von der ein Rücklauf (82) mit einem ersten Überströmventil (80) abzweigt, **dadurch gekennzeichnet, dass** stromabwärts des Ventils (54) ein weiterer Rücklauf (88) mit einem ein mittleres Druckniveau der Zumesseinheit (48) beeinflussenden Ventil (90) angeordnet ist.

2. Eindosierungsvorrichtung nach Anspruch 1, **dadurch gekennzeichnet, dass** stromabwärts des Ventils (54) ein Dosierventil (56) angeordnet ist.

3. Eindosierungsvorrichtung nach Anspruch 2, **dadurch gekennzeichnet, dass** der weitere Rücklauf (88) zwischen dem Ventil (54) und dem Dosierventil (56) angeordnet ist.

4. Eindosierungsvorrichtung nach einem der vorhergehenden Ansprüche, **dadurch gekennzeichnet, dass** der Versorgungsvorrichtung (72) für Kraftstoff, insbesondere für Dieselkraftstoff, nachgeschaltet, eine Drosselstelle (76, 86) der Zumesseinheit (48) vorgeschaltet ist.

5. Eindosierungsvorrichtung nach einem der vorhergehenden Ansprüche, **dadurch gekennzeichnet, dass** eine Einrichtung (78, 84) zur Dämpfung von Druckschwankungen in das Leitungssystem der Zumesseinheit (48) integriert ist.

6. Eindosierungsvorrichtung nach Anspruch 5, **dadurch gekennzeichnet, dass** die Zumesseinheit (48) über den ein erstes Überströmventil (80) aufweisenden Rücklauf (82) an einen Sammelbehälter (74) im Kraftfahrzeug angeschlossen ist und stromabwärts nach der Anschlussstelle des Rücklaufs (82) die Zumesseinheit (48) und/oder das Schließventil (54) mit der Einrichtung (78, 84) zur Dämpfung von Druckschwankungen versehen ist.

7. Eindosierungsvorrichtung nach Anspruch 5, **dadurch gekennzeichnet, dass** die Einrichtung zur Dämpfung (78, 84) von Druckschwankungen zumindest eine Dämpferdrossel (84) und/oder eine der Zumesseinheit (48) zugeordnete Kammer oder eine Erweiterung im Leitungssystem der Zumesseinheit (48) umfasst.

8. Eindosierungsvorrichtung nach Anspruch 2, 4 und 7, **dadurch gekennzeichnet, dass** die Zulaufdrossel (86) stromabwärts nach der Anschlussstelle des Rücklaufes (82) vor dem Schließventil (54) und die Dämpferdrossel (84) in der Zumesseinheit (48) zwischen dem Schließventil (54) und dem Dosierventil (56) vorgesehen ist.

9. Ein dosierungsvorrichtung nach Anspruch 2 und 5, **dadurch gekennzeichnet, dass** die Einrichtung (78, 84) zur Dämpfung von Druckschwankungen zwischen dem Schließventil (54) und dem Dosierventil (56) in die Zumesseinheit (48) integriert ist.

10. Eindosierungsvorrichtung nach Anspruch 7, **dadurch gekennzeichnet, dass** die Einrichtung (78, 84) zur Dämpfung von Druckschwankungen als Behälter oder als Erweiterungsteil zur Aufnahme eines zusätzlichen Kraftstoffvolumens Teil eines Ventilblockes oder Teil des Leitungssystems der Zumesseinheit (48) ist.

11. Eindosierungsvorrichtung nach Anspruch 2 und 5, **dadurch gekennzeichnet, dass** in der Zumesseinheit (48) nach dem Schließventil (54) und vor dem Dosierventil (56) zumindest ein erster Drucksensor (50) vorgesehen ist, der mit der Einrichtung (78, 84) zur Dämpfung von Druckschwankungen in Wirkverbindung steht.

12. Eindosierungsvorrichtung nach einem der vorhergehenden Ansprüche, **dadurch gekennzeichnet, dass** zwischen dem Schließventil (54) und dem Dosierventil (56) zumindest eine Drosselstelle (84) mit dem ersten Drucksensor (50) verbunden ist, die mit der Einrichtung (78) zur Dämpfung von Druckschwankungen in Wirkverbindung steht.

13. Eindosierungsvorrichtung nach einem der vorhergehenden Ansprüche, **dadurch gekennzeichnet, dass** zwischen dem Schließventil (54) und dem Dosierventil (56) oder einem Druckdämpfer (78) der Parallelrücklauf (88) mit einem zweiten Überstromventil (90) verläuft.

14. Eindosierungsvorrichtung nach einem der vorhergehenden Ansprüche, **dadurch gekennzeichnet, dass** die Einspritzdüse (40) als Einspritzventil ausgebildet ist.

## Claims

1. Dosing-in apparatus for fuel upstream of an oxidation catalytic converter (42) in the exhaust tract (36) of an internal combustion engine (10), wherein, downstream of a supply device (72) for fuel, a valve (54) and an injection nozzle (40) are integrated into a line of a metering unit (48), from which line a return line (82) with a first overflow valve (80) branches off, **characterized in that** a further return line (88) with a valve (90) which influences a mean pressure level of the metering unit (48) is arranged downstream of the valve (54).

2. Dosing-in apparatus according to Claim 1, **characterized in that** a dosing valve (56) is arranged downstream of the valve (54).

3. Dosing-in apparatus according to Claim 2, **characterized in that** the further return line (88) is arranged between the valve (54) and the dosing valve (56).

4. Dosing-in apparatus according to one of the preceding claims, **characterized in that**, downstream of the supply apparatus (72) for fuel, in particular for diesel fuel, a throttle point (76, 86) is positioned upstream of the metering unit (48).

5. Dosing-in apparatus according to one of the preceding claims, **characterized in that** a device (78, 84) for damping pressure oscillations is integrated into the line system of the metering unit (48).

6. Dosing-in apparatus according to Claim 5, **characterized in that** the metering unit (48) is connected via the return line (82), which has a first overflow valve (80), to a collecting tank (74) in the motor vehicle, and downstream of the connection point of the return line (82), the metering unit (48) and/or the closure valve (54) is provided with the device (78, 84) for damping pressure oscillations.

7. Dosing-in apparatus according to Claim 5, **characterized in that** the device (78, 84) for damping pressure oscillations comprises at least one damper throttle (84) and/or a chamber assigned to the metering unit (48) or a widened portion in the line system of the metering unit (48).

8. Dosing-in apparatus according to Claim 2, 4 and 7, **characterized in that** the feed throttle (86) is provided downstream of the connection point of the return line (82) and upstream of the closure valve (54), and the damper throttle (84) is provided in the metering unit (48) between the closure valve (54) and the dosing valve (56).

9. Dosing-in apparatus according to Claim 2 and 5, **characterized in that** the device (78, 84) for damping pressure oscillations is integrated into the metering unit (48) between the closure valve (54) and the dosing valve (56).

10. Dosing-in apparatus according to Claim 7, **characterized in that** the device (78, 84) for damping pressure oscillations, in the form of a tank or a widened part for receiving an additional fuel volume, is part of a valve block or part of the line system of the metering unit (48).

11. Dosing-in apparatus according to Claim 2 and 5, **characterized in that** at least one first pressure sensor (50) is provided in the metering unit (48) downstream of the closure valve (54) and upstream of the dosing valve (56), which first pressure sensor is operatively connected to the device (78, 84) for damping pressure oscillations.

12. Dosing-in apparatus according to one of the preceding claims, **characterized in that**, between the closure valve (54) and the dosing valve (56), there is connected to the first pressure sensor (50) at least one throttle point (84) which is operatively connected to the device (78) for damping pressure oscillations.

13. Dosing-in apparatus according to one of the preceding claims, **characterized in that** the parallel return line (88) with a second overflow valve (90) runs between the closure valve (54) and the dosing valve (56) or a pressure damper (78).

14. Dosing-in apparatus according to one of the preceding claims, **characterized in that** the injection nozzle (40) is in the form of an injection valve.

## Revendications

1. Dispositif de dosage de carburant en amont d'un catalyseur d'oxydation (42) dans le système de gaz d'échappement (36) d'un moteur à combustion interne (10), dans lequel, en aval d'un dispositif d'alimentation (72) de carburant, une soupape (54) ainsi qu'une buse d'injection (40) sont intégrées dans une conduite d'une unité de dosage (48), de laquelle part un retour (82) avec une première soupape de débordement (80), **caractérisé en ce qu'**en aval de la soupape (54) est disposé un retour supplémentaire (88) avec une soupape (90) influençant un niveau de pression moyen de l'unité de dosage (48).

2. Dispositif de dosage selon la revendication 1, **caractérisé en ce qu'**en aval de la soupape (54) est disposée une soupape de dosage (56).

3. Dispositif de dosage selon la revendication 2, **caractérisé en ce que** le retour supplémentaire (88) est disposé entre la soupape (54) et la soupape de dosage (56).

4. Dispositif de dosage selon l'une quelconque des revendications précédentes, **caractérisé en ce qu'**en aval du dispositif d'alimentation (72) de carburant, en particulier de carburant diesel, est monté un point d'étranglement (76, 86) en amont de l'unité de dosage (48).

5. Dispositif de dosage selon l'une quelconque des revendications précédentes, **caractérisé en ce qu'**un dispositif (78, 84) d'amortissement des variations de pression est intégré dans le système de conduites de l'unité de dosage (48).

6. Dispositif de dosage selon la revendication 5, **caractérisé en ce que** l'unité de dosage (48) est raccordée par le biais du retour (82) présentant une première soupape de débordement (80) à un récipient collecteur (74) dans le véhicule automobile, et en aval après le point de raccordement du retour (82), l'unité de dosage (48) et/ou la soupape de fermeture (54) est pourvue du dispositif (78, 84) d'amortissement des variations de pression.

7. Dispositif de dosage selon la revendication 5, **caractérisé en ce que** le dispositif d'amortissement (78, 84) des variations de pression comprend au moins un organe d'étranglement d'amortissement (84) et/ou une chambre associée à l'unité de dosage (48) ou un élargissement dans le système de conduites de l'unité de dosage (48).

8. Dispositif de dosage selon les revendications 2, 4 et 7, **caractérisé en ce que** l'organe d'étranglement d'alimentation (86) est prévu en aval après le point de raccordement du retour (82), avant la soupape de fermeture (54), et l'organe d'étranglement d'amortissement (84) est prévu dans l'unité de dosage (48) entre la soupape de fermeture (54) et la soupape de dosage (56).

9. Dispositif de dosage selon les revendications 2 et 5, **caractérisé en ce que** le dispositif (78, 84) d'amortissement des variations de pression est intégré entre la soupape de fermeture (54) et la soupape de dosage (56) dans l'unité de dosage (48).

10. Dispositif de dosage selon la revendication 7, **caractérisé en ce que** le dispositif (78, 84) d'amortissement des variations de pression sous forme de récipient ou de partie d'élargissement pour recevoir un volume de carburant supplémentaire fait partie d'un bloc-soupape ou fait partie du système de conduites de l'unité de dosage (48).

11. Dispositif de dosage selon les revendications 2 et 5, **caractérisé en ce que** dans l'unité de dosage (48) après la soupape de fermeture (54) et avant la soupape de dosage (56), est prévu au moins un premier capteur de pression (50) qui est en liaison fonctionnelle avec le dispositif (78, 84) d'amortissement des variations de pression.

12. Dispositif de dosage selon l'une quelconque des revendications précédentes, **caractérisé en ce qu'**entre la soupape de fermeture (54) et la soupape de dosage (56), au moins un point d'étranglement (84) est connecté au premier capteur de pression (50), lequel point d'étranglement est en liaison fonctionnelle avec le dispositif (78) d'amortissement des variations de pression.

13. Dispositif de dosage selon l'une quelconque des revendications précédentes, **caractérisé en ce qu'**entre la soupape de fermeture (54) et la soupape de dosage (56) ou un amortisseur de pression (78) s'étend le retour parallèle (88) avec une deuxième soupape de débordement (90).

14. Dispositif de dosage selon l'une quelconque des revendications précédentes, **caractérisé en ce que** la buse d'injection (40) est réalisée sous forme de soupape d'injection.
